# FASCICULE DE BREVET EUROPEEN

(11) **EP 1 434 916 B1**
(45) Date de publication et mention de la délivrance du brevet: **13.06.2007**
(21) Numéro de dépôt: 02800648.4
(22) Date de dépôt: 11.10.2002
(51) Int. Cl.: E02D 27/06, E02D 27/36

(54) **AGENCEMENT D'UNE CONSTRUCTION MOBILE ENTRE DEUX POSITIONS L'UNE EN APPUI AU SOL ET L'AUTRE FLOTTANTE**
ZWISCHEN ZWEI POSITIONEN, EINE AUF DEM BODEN AUFLIEGENDE UND EINE SCHWIMMENDE, BEWEGLICHE GEBÄUDEANORDNUNG
ARRANGEMENT OF A BUILDING MOBILE BETWEEN TWO POSITIONS, ONE SUPPORTED ON THE GROUND AND THE OTHER FLOATING

(30) Priorité: 11.10.2001 FR 0113065
(43) Date de publication de la demande: 07.07.2004
(73) Titulaire: De Chérancé, Frédéric, 64520 Guiche (FR)
(72) Inventeur: De Chérancé, Frédéric, 64520 Guiche (FR)
(74) Mandataire: Fantin, Laurent
(86) Numéro de dépôt international: PCT/FR2002/003461
(87) Numéro de publication internationale: WO 2003/031732

(56) Documents cités:
- WO-A-98/38390
- US-A- 4 043 287
- US-A- 5 281 055
- US-A- 5 347 949
- US-A- 5 803 007
- US-B1- 6 347 487

## Description

La présente invention concerne un agencement d'une construction mobile entre deux positions l'une en appui au sol et l'autre flottante.

On connaît le problème des constructions, qu'elles soient à vocation d'habitation, d'entrepôt ou d'atelier, situées dans des zones non inondables au moment de la construction et qui se trouvent ensuite amenées à subir des crues. En effet, les paysages alentours peuvent varier, les constructions de routes, les aménagements de berges ou de nombreuses autres raisons conduisent à modifier le caractère inondable ou non d'une zone.

De ce fait, il faut attendre une crue pour constater le caractère inondable de certaines zones classées sans danger avec les lourdes conséquences engendrées.

Même dans ce cas, les terrains alentours continuent à être commercialisés et/ou construits car les modifications administratives sont longues à mettre en place.

De plus, il faut constater aussi que certaines zones inondables sont particulièrement bien situées par rapport à une ville par exemple et attractives même si le risque de crue existe.

Bien souvent, les travaux à prévoir pour éviter tout risque d'inondations sont trop coûteux ou irréalisables pour d'autres raisons.

La solution consiste donc à se préoccuper de la construction elle-même'et à faire en sorte qu'elle puisse subir une crue sans dommage.

La solution est de disposer d'un agencement de construction qui puisse flotter au moment de la crue.

C'est ainsi que l'on connaît par la demande internationale de brevet WO98/38390 une réalisation avec un caisson flottant supportant lui-même la construction.

Dans chacun des coins, il est prévu un poteau permettant le guidage de l'ensemble caisson et construction équipé de moyens à cliquet et crémaillère pour maintenir cet ensemble dans une position horizontale stable au fur et à mesure de l' évolution de la hauteur d'eau.

Un tel agencement est extrêmement complexe à mettre en oeuvre en plus du coût très élevé. De plus, est-ce que ces moyens à cliquet et crémaillère fonctionneront le jour où il le faudra avec une totale fiabilité, ceci et plus difficile à imaginer.

De plus, l'ensemble des problèmes que soulèvent de tels édifices n'est pas solutionné.

Le brevet américain US 5 347 949 décrit aussi une maison flottante montée sur des vérins. Cette construction consiste à combiner un plancher avec des caissons flottants, l'ensemble étant disposé sur des vérins télescopiques situés également aux quatre coins du plancher.

Cette solution à vérins est délicate car les systèmes télescopiques doivent être également entretenus, ce qui n'est pas simple et il faut aussi que le moment venu, aucun de ces vérins ne se grippent pour ne pas déséquilibrer la construction lors de la montée du flot.

Quant au plancher, en position au sol, il repose sur des plots liés au sol, en plus des caissons eux-mêmes qui reposent aussi sur le sol et assurent une stabilité de la construction lorsque celle-'ci est au sec.

Ceci pose des problèmes car ces obstacles sont source d'accumulation de charges transportées par le flux.

L'édifice étant maintenu par des crémaillères, le nettoyage est sans doute possible après la crue mais ce montage reste délicat dans un environnement hostile. Enfin, il faut ensuite une grue pour redescendre l'ensemble suspendu sur ses crémaillères.

Le brevet américain US-6.347.487 qui est considéré comme l'état de la technique le plus proche décrit une construction mobile entre deux positions l'une en appui au sol et l'autre flottante comprenant un châssis, des moyens de flottaison et des moyens de guidage comportant des mâts implantés dans le sol et des colliers reliés à la partie flottante et aptes à coulisser le long desdits mâts.

Le brevet américain US-4.043.287 décrit un ponton modulable permettant d'ajuster la position de portions susceptibles d'être disposées entre les bateaux par rapport à une partie principale du ponton. Ce dispositif comprend des mâts implantés dans l'eau et une structure flottante avec des ouvertures autorisant le passage des mâts.

De tels aménagements apportent des solutions théoriques plus que pratique et laissent de coté certains problèmes.

Un de ces problèmes se pose lorsque la crue est passée et que le niveau de l'eau descend. La construction doit reposer sur des éléments stables comme à l'origine.

Les solutions de l'art antérieur par exemple présentent de nombreux obstacles à l'écoulement de l'eau et surtout retiennent les éventuelles charges transportées par le flot comme des blocs de pierre, des branches, des troncs d'arbre, des poutres ou des débris métalliques.

De plus, les espaces entre les caissons eux-mêmes sont susceptibles de loger des charges flottantes entraînées par le flot sous les caissons, charges qui peuvent poser des problèmes lors de la redescente.

Un autre problème important est le guidage de la construction lors des mouvements ascendant et descendant. Il faut impérativement qu'il fonctionne en toutes circonstances et il est exclu qu'un dysfonctionnement puisse contrarier les mouvements. Pendant ces phases de mobilité, l'équilibre de l'édifice doit être conservé, ce qui ne veut pas dire qu'il faille conserver une stricte horizontalité.

Dans le même temps, la résistance au flot doit être minimisée.

Un autre problème est celui des connexions avec les réseaux électriques et fluides qui sont enterrés et qui se prolongent dans la construction.

Enfin, il faut tenir compte des coûts de construction car l'intérêt de construire dans une zone inondable peut être limité si les surcoûts engendrés deviennent très importants.

La présente invention pallie les inconvénients des aménagements connus de l'art antérieur et propose un agencement fiable et qui ne perturbe pas l'esthétique de la construction, surtout lorsqu'il s'agit d'une maison à usage d'habitation car il faut aussi tenir compte de ce paramètre.

La présente invention comme décrit dans revendication indépendante 1 est maintenant décrite en regard des dessins annexés qui représentent un mode de réalisation préférentiel, non limitatif, les différentes figures de ces dessins montrant :
- figure 1A, une vue en perspective d'une construction schématique aménagée selon la présente invention, en position stable basse,
- figure 1B, une vue en perspective d'une construction schématique aménagée selon la présente invention, en position flottante,
- figure 2, une vue en coupe longitudinale de cette même construction,
- figure 3, une vue en coupe transversale de cette même construction,
- figure 4, une vue d'une variante de réalisation à forme hydrodynamique,
- figure 5, une vue de détail des liaisons électriques et fluides, et
- figure 6, une vue de détail d'un mode de montage de caissons.

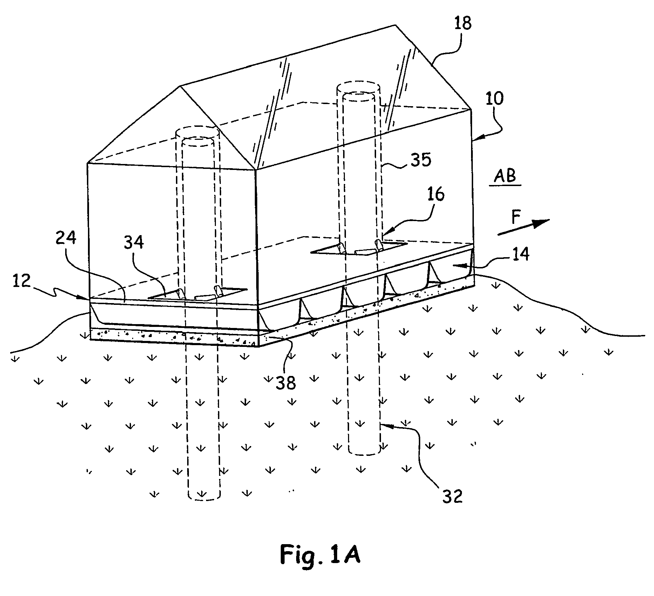

Sur la figure 1A, on a représenté une construction 10 disposée sur un châssis 12 comportant des moyens 14 de flottaison, des moyens 16 de guidage de cette construction entre deux positions, l'une d'assise basse AB et l'autre stable flottante SF en cas de crue.

Le sens d'écoulement des eaux est indiqué par la flèche F.

La construction 10 est schématiquement représentée par une maison 18 à usage d'habitation mais il peut s'agir d'un local ayant tout autre destination. Les proportions sont exagérées pour la bonne clarté du dessin et pour la compréhension technique au détriment de l'esthétique qui ne relève pas de la présente invention.

De préférence, en cas de maison d'habitation pour le moins, la construction est en bois, ce qui limite le poids et autorise de légères déformations de la structure sans subir de dommages.

Dans le cas d'une maison à usage d'habitation, il est nécessairement prévu des réseaux 20 d'alimentation en électricité et en fluides. Pour la simplification de la représentation, un seul flexible 22 est représenté, susceptible de contenir le câble d'alimentation électrique, le flexible d'alimentation en eau potable et la conduite centrale d'évacuation d'eaux usées pour le moins.

Cette construction est généralement munie d'un plancher 24 intérieur, isolé, hydrophobe.

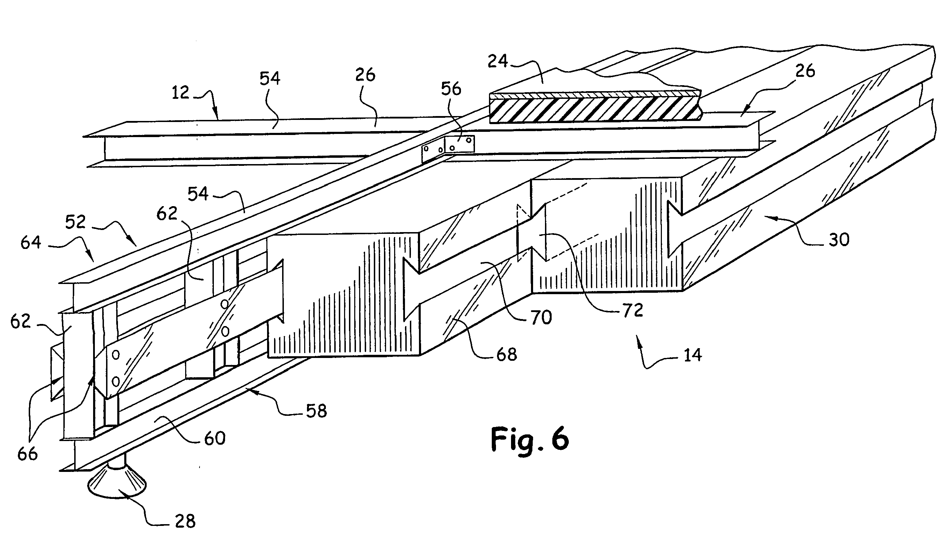

Comme représenté sur la figure 6, le châssis 12 est constitué avantageusement de poutrelles 26 en acier galvanisé ou en aluminium par exemple, formant un maillage apte à recevoir le plancher 24 isolé de la construction. Ce maillage est nécessaire pour assurer la reprise de la charge et pour conserver plan ce plancher. Ce maillage sert aussi d'assise à la construction.

Ce châssis comprend en outre des pieds 28 supports, orientés perpendiculairement vers le bas.

Ce châssis 12 intègre aussi les moyens 14 de flottaison sous forme de caissons 30, régulièrement répartis sous toute la surface. Ces caissons peuvent éventuellement être de dimensions différentes, en fonction de la charge supportée mais au risque de compliquer la réalisation du châssis et d'engendrer des problèmes d'adaptabilité.

Quant aux moyens 16 de guidage de cette construction entre deux positions, l'une d'assise basse AB et l'autre stable flottante SF en cas de crue, ils comprennent au moins deux mâts 32 solidement implantés dans le sol. Les techniques d'implantation de tels pieux sont bien connues et couramment réalisées.

De préférence, ces mâts sont ronds ou à section profilée notamment ovale dans le sens d'écoulement des eaux en sorte de limiter la résistance à l'eau et de permettre le dégagement des charges circulant avec le flot.

Ces deux mâts sont disposés dans le plan médian de la construction suivant un axe sensiblement parallèle au sens d'écoulement des eaux indiqué par la flèche F. Ces deux mâts sont d'une hauteur adaptée en fonction du niveau maximum des eaux à laquelle il convient d'ajouter une hauteur de sécurité.

Généralement, une hauteur d'un étage est suffisante. D'autre part, il convient de savoir quelle est la hauteur de départ car il est aussi possible de prévoir une butte ménagée sous la construction.

Ces moyens de guidage sont complétés par des colliers 34, aptes à coulisser le long des mâts, par exemple des cadres avec des galets disposés à 90°, dans les angles du cadre. Le jeu n'a pas nécessairement une grande précision car il s'agit d'un guidage et non d'une glissière. Quelle que soit la position du châssis, même s'il s'incline de quelques degrés, ces colliers restent toujours mobiles autour des mâts. Un montage avec des rotules ou d'autres articulations complexes donc difficilement fiables, coûteuses et nécessitant un minimum d'entretien est inutile.

Afin de masquer les mâts pénétrant à l'intérieur de la construction, il est prévu des caches 35 solidaires du plancher, un cache par mât. Ces caches peuvent être des éléments de cloison de la construction en fonction des dispositions intérieures ou des éléments à part entière en harmonie avec la construction.

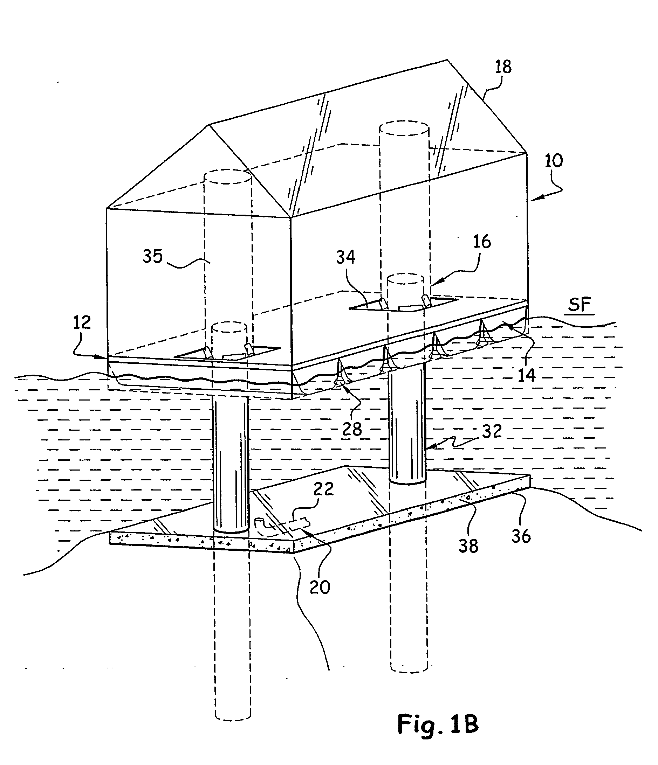

Ainsi que cela est visible sur la figure 1B, la surface 36 de terrain située sous la construction est avantageusement recouverte d'une dalle 38 en béton afin de disposer d'un sol sans élément en saillie susceptible de retenir des charges. C'est pour cette raison que les pieds 38 supports sont montés solidaires du châssis et embarqués avec la structure lorsque celle-ci flotte comme montré sur la figure 1B.

Cette dalle est de fait ancrée sur les pieds des deux mâts. Elle est représentée avec une surface identique à celle de la construction mais elle pourrait en déborder sans inconvénient. De même, la forme plane peut avantageusement être de forme pyramidale tronquée, ce qui facilite l'écoulement lors de la crue.

Les accessoires ne sont pas indiqués sur les figures car ils ne sont pas de première nécessité mais il est bien entendu nécessaire de prévoir des moyens d'accès tels que des escaliers à la périphérie, soit métalliques solidaires du châssis, soit amovibles. Il en est de même pour la rampe de garage éventuel qui doit être adaptée en fonction de la construction. Le véhicule doit pouvoir être supporté par le châssis s'il se trouve dans le garage au moment de la crue.

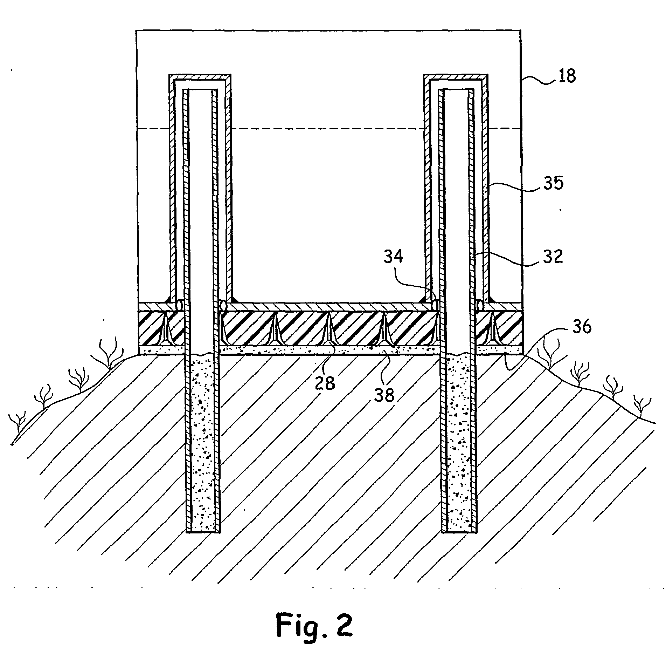

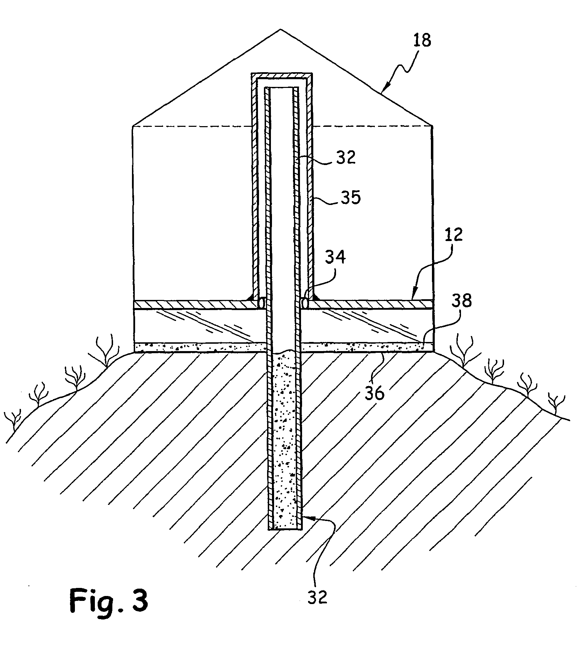

Les figures 2 et 3 permettent de mieux appréhender encore l'agencement selon la présente invention. Les références sont identiques pour les éléments identiques.

L'équilibre de la construction est dicté par la flottaison des caissons et donc sujet à une certaine gîte.

On note que la construction est guidée, retenue mais qu'elle reste libre en flottaison afin de ne pas présenter une résistance radicale au flot.

Une construction en bois trouve là tout son intérêt.

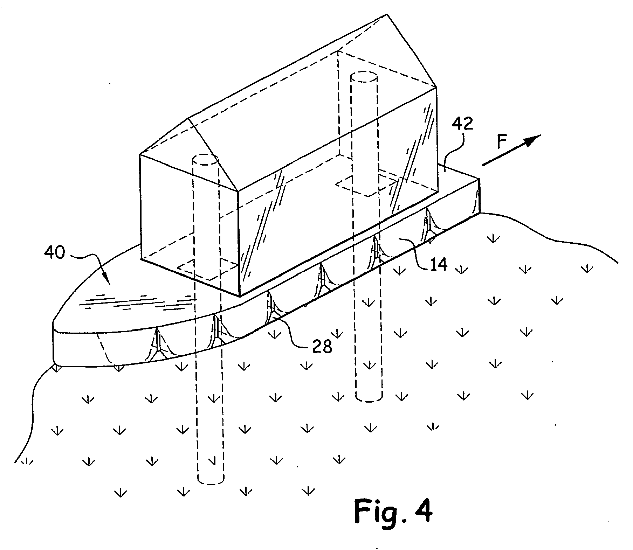

Une forme préférentielle du châssis et des moyens de flottaison qui lui sont rattachés est représentée sur la figure 4.

Cette forme hydrodynamique dispose d'une proue 40 et d'une poupe 42 à la façon d'une structure navigante afin de tenir compte de la vitesse du flot par rapport à la structure à l'inverse des structures navigantes qui se déplacent sur une surface fluide sensiblement immobile.

Ces caissons sont dimensionnés en sorte de placer le plancher de la construction suffisamment au-dessus de la surface du flot pour éviter que l'eau n'atteigne l'intérieur de la construction.

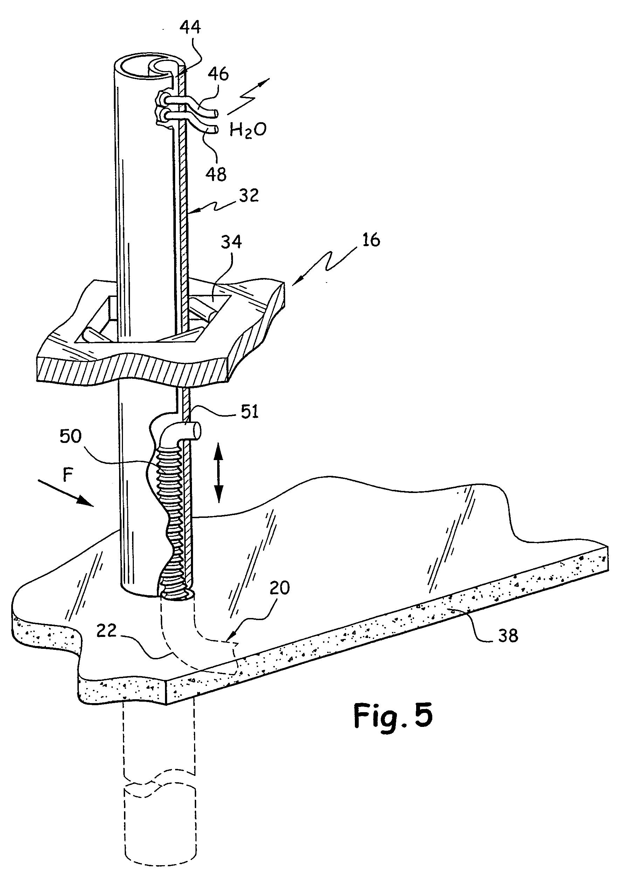

Sur la figure 5, on a représenté en détail le réseau 20 d'alimentation en électricité et en fluides concentré dans un même flexible 22 jusqu'en pied de mât.

Dans un mode de réalisation simple, le mât est à section circulaire et creux intérieur avec un logement 44 en C ménagé suivant une génératrice. Le câble électrique 46 peut traverser la paroi en pied de mât et être lové dans l'espace intérieur libre, tout comme le flexible 48 d'alimentation en eau potable.

Le passage peut être un passage étanche si nécessaire pour éviter toute pénétration d'eau avec une sortie par la partie supérieure du mât, dans la construction.

Quant à la conduite des eaux usées, elle peut être placée dans le logement 44 et comprendre une conduite 50 annelée extensible. Ainsi, lors de la mise en flottaison, cette conduite 50 s'allonge sous la traction exercée, le logement en C faisant office de fourreau. Un coude 51 du commerce est solidaire de l'extrémité de cette conduite et coulisse dans la fente du profil en C.

De façon avantageuse, le logement en C permet le guidage en retour de la conduite 50 annelé lorsque le niveau diminue et que le châssis revient en appui sur la dalle 38. La conduite se comprime et le fourreau du logement en C évite tout déraillage.

Sur la figure 6, on a représenté un mode de montage des moyens de flottaison sur un châssis spécifique.

Le châssis comprend dans ce cas, une première nappe 52 constituée d'un maillage de poutres 54 fixées entre elles de façon connue, par exemple au moyen de pièces 56 de liaison.

Une seconde nappe 58 comprend seulement un réseau de poutres 60 parallèles avec des entretoises 62 qui séparent les deux nappes.

On obtient ainsi des fermes 64 parallèles.

Des rails 66, à profil en queue d'aronde par exemple, sont rapportés de part et d'autre de chaque ferme.

Des caissons 68 portent des rainures 70 à section en queue d'aronde sur deux faces opposés, aptes à coopérer par translation avec les rails 66, parallèlement aux poutres 60.

On peut ainsi disposer de façon solidaire mais néanmoins amovible des caissons 68 de part et d'autre de chaque ferme.

Comme les caissons ne doivent être ni trop lourds, ni trop volumineux unitairement, la largeur est inférieure à celle qui sépare deux fermes.

De ce fait, il est prévu des pièces 72 de liaison en double queue d'aronde qui sont interposées entre deux caissons adjacents pour les lier les uns aux autres. On peut ainsi placer plusieurs caissons entre deux fermes, sans discontinuité susceptibles de recevoir des charges du flot.

Les caissons peuvent être réalisés par tout moyen, mais un mode particulièrement satisfaisant consiste en des enveloppes en matière polymère chargée de fibres pour conférer des caractéristiques mécaniques suffisantes, dont le volume intérieur est comblé par de la mousse.

Un tel agencement permet à la construction de prendre une première position en appui au sol comme une construction traditionnelle liée au sol et l'autre flottante, de la même façon que certaines constructions lacustres afin de suivre l'évolution du flot et la hauteur de crue lorsque celle-ci se produit, ce qui est d'une durée généralement limitée à quelques jours.

Le but n'est pas nécessairement de conserver l'habitation avec ses occupants durant la crue.

Soit les occupants ont été prévenus à l'avance et ils ont pu s'éloigner vers une zone non inondée, -soit les occupants sont surpris et ils peuvent rester dans la construction, à l'abri des intempéries et du danger, en attendant une évacuation. En cas de faible crue, les occupants peuvent sans problème rester dans la construction.

En complément, des moyens autonomes de production d'énergie peuvent être embarqués afin de subvenir aux besoins car les réseaux sont généralement perturbés.

De même, le nombre de deux mâts n'est pas limité puisque, en fonction des dimensions de la construction, ce nombre pourra être augmenté, à condition de ne réaliser qu'un alignement unique.

## Revendications

1. Agencement d'une construction (10) mobile, notamment une maison (18) à usage d'habitation entre deux positions l'une en appui au sol et l'autre flottante comprenant un châssis (12), des moyens (14) de flottaison et des moyens (16) de guidage, en vue d'une implantation en zone inondable, **caractérisé en ce que** ces moyens (16) de guidage comprennent au moins deux mâts (32) implantés dans le sol et disposés dans le plan médian de la construction suivant un axe F sensiblement parallèle au sens d'écoulement des eaux et des colliers (34), aptes à coulisser le long desdits mâts (32).

2. Agencement d'une construction (10) mobile selon la revendication 1, **caractérisé en ce que**, au moins la surface (36) située sous la construction est recouverte d'une dalle (38) exempte d'obstacles.

3. Agencement d'une construction (10) mobile selon l'une quelconque des revendications précédentes, **caractérisé en ce que** les mâts (32) ont une hauteur adaptée en fonction du niveau maximum des eaux avec une hauteur de sécurité.

4. Agencement d'une construction (10) mobile selon l'une quelconque des revendications précédentes, **caractérisé en ce qu'**il comprend un cache (35) solidaire du plancher, disposé autour de chaque mât.

5. Agencement d'une construction (10) mobile selon l'une quelconque des revendications précédentes, **caractérisé en ce que** les mâts (32) sont profilés.

6. Agencement d'une construction (10) mobile selon l'une quelconque des revendications précédentes, **caractérisé en ce que** le châssis (12) comprend une première nappe (52) constituée d'un maillage de poutres (54) fixées entre elles, une seconde nappe (58) avec un réseau de poutres (60) parallèles avec des entretoises (62) qui séparent les deux nappes pour constituer des fermes (64).

7. Agencement d'une construction (10) mobile selon la revendication 6, **caractérisé en ce que** le châssis (12) comprend des rails (66), rapportés de part et d'autre de chaque ferme (64) et des caissons (68) munis de rainures (70) aptes à coopérer par translation avec les rails (66) et à solidariser lesdits caissons.

8. Agencement d'une construction (10) mobile selon la revendication 7, **caractérisé en ce que** il comprend des pièces (72) de liaison en double interposées entre deux caissons (68) adjacents pour les lier les uns aux autres.

9. Agencement d'une construction (10) mobile selon l'une des revendications 7 ou 8, **caractérisé en ce que** le profil des rails (66), des rainures (70) et des pièces (72) de liaison est en queue d'aronde.

10. Agencement d'une construction (10) mobile selon l'une quelconque des revendications précédentes, **caractérisé en ce qu'**il comprend un réseau (20) d'alimentation en électricité et en fluides et **en ce que** l'un des mâts (32) comprend un logement (44) en C ménagé suivant une génératrice, pour recevoir au moins la conduite 50 des eaux usées, annelée et extensible à laquelle est associée un coude.

11. Agencement d'une construction (10) mobile selon l'une quelconque des revendications précédentes, **caractérisé en ce que** le châssis (12) et les moyens (14) de flottaison présentent une forme hydrodynamique avec une proue (40) et une poupe (42).

## Claims

1. Arrangement of a construction (10), in particular a house (18) for dwelling use, able to move between two positions, one in abutment on the ground and the other, floating comprising a chassis (12), flotation means (14) and guidance means (16), with a view to installation in an area that may be flooded, **characterised in that** these guidance means (16) comprise at least two masts (32) planted in the ground and disposed in the mid-plane of the construction along an axis F substantially parallel to the direction of flow of the water, and collars (34) able to slide along said masts (32).

2. Arrangement of a mobile construction (10) according to claim 1, **characterised in that** at least the surface (36) situated under the construction is covered with a slab (38) free from obstacles.

3. Arrangement of a mobile construction (10) according to any one of the preceding claims, **characterised in that** the masts (32) have a height adapted according to the maximum level of the water with a safety height.

4. Arrangement of a mobile construction (10) according to any one of the preceding claims, **characterised in that** it comprises a cover (35) fixed to the floor, disposed around each mast.

5. Arrangement of a mobile construction (10) according to any one of the preceding claims, **characterised in that** the masts (34) are profiled.

6. Arrangement of a mobile construction (10) according to any one of the preceding claims, **characterised in that** the chassis (12) comprises a first layer (32) consisting of a mesh of beams (54) fixed to one another, a second layer (58) with a network of parallel beams (60) with struts (62) that separate the two layers in order to constitute trusses (64).

7. Arrangement of a mobile construction (10) according to claim 6, **characterised in that** the chassis (12) comprises rails (66) attached to each side of each truss (64) and boxes (68) provided with grooves (70) able to cooperate by translation with the rails (66) and to fix said boxes.

8. Arrangement of a mobile construction (10) according to claim 7, **characterised in that** it comprises double connecting pieces (72) interposed between two adjacent boxes (68) in order to connect them to each other.

9. Arrangement of a mobile construction (10) according to one of claims 7 or 8, **characterised in that** the profile of the rails (66), grooves (70) and connecting pieces (72) is in a dovetail.

10. Arrangement of a mobile construction (10) according to any one of the preceding claims, **characterised in that** it comprises a system (20) supplying electricity and fluids and **in that** one of the masts (32) comprises a C-shaped housing (44) provided along a generatrix, in order to receive at least the waste water pipe (50), girdled and extensible, with which an elbow is associated.

11. Arrangement of a mobile construction (10) according to any one of the preceding claims, **characterised in that** the chassis (12) and the flotation means (14) have a hydrodynamic shape with a prow (40) and a stern (42).

## Patentansprüche

1. Anordnung eines zwischen zwei Positionen, einer am Boden aufliegenden und einer schwimmenden, beweglichen Gebäudes (10), insbesondere eines Wohnhauses (18), umfassend ein Gestell (12), Schwimmmittel (14) und Führungsmittel (16), zum Einsatz in einem überschwemmbaren Gebiet, **dadurch gekennzeichnet, dass** die Führungsmittel (16) mindestens zwei im Boden eingesetzte, in der Mittelebene des Gebäudes entlang einer Achse F, im Wesentlichen parallel zur Strömungsrichtung des Wassers angeordnete Maste (32) und entlang der Maste (32) verschiebbare Schellen (34) umfassen.

2. Anordnung eines beweglichen Gebäudes (10) nach Anspruch 1, **dadurch gekennzeichnet, dass** mindestens die unterhalb des Gebäudes befindliche Fläche (36) mit einer hindernisfreien Platte (38) bedeckt ist.

3. Anordnung eines beweglichen Gebäudes (10) nach einem der vorstehenden Ansprüche, **dadurch gekennzeichnet, dass** die Maste (32) eine dem maximalen Wasserpegel angepasste Höhe plus eine Sicherheitshöhe aufweisen.

4. Anordnung eines beweglichen Gebäudes (10) nach einem der vorstehenden Ansprüche, **dadurch gekennzeichnet, dass** sie eine mit dem Fußboden verbundene und um jeden Mast angeordnete Abdeckung (35) umfasst.

5. Anordnung eines beweglichen Gebäudes (10) nach einem der vorstehenden Ansprüche, **dadurch gekennzeichnet, dass** die Maste (32) profiliert sind.

6. Anordnung eines beweglichen Gebäudes (10) nach einem der vorstehenden Ansprüche, **dadurch gekennzeichnet, dass** das Gestell (12) eine erste aus einem Netz von untereinander befestigten Balken (54) bestehende Lage (52), eine zweite Lage (58) mit einem Netzwerk aus parallelen Balken (60) mit Distanzhaltern (62), die zur Bildung von Trägern (64) die beiden Lagen voneinander trennen, umfasst.

7. Anordnung eines beweglichen Gebäudes (10) nach Anspruch 6, **dadurch gekennzeichnet, dass** das Gestell (12) beiderseits eines jeweiligen Trägers (64) angesetzte Schienen (66) und Kästen (68) mit Nuten (70) umfasst, wobei die Nuten zur Befestigung der Kästen verschieblich mit den Schienen (66) in Eingriff bringbar sind.

8. Anordnung eines beweglichen Gebäudes (10) nach Anspruch 7, **dadurch gekennzeichnet, dass** sie doppelte Verbindungsstücke (72) umfasst, die zwischen zwei aneinander grenzende Kästen (68) eingesetzt sind, um diese untereinander zu verbinden.

9. Anordnung eines beweglichen Gebäudes (10) nach einem der Ansprüche 7 oder 8, **dadurch gekennzeichnet, dass** das Profil der Schienen (66), der Nuten (70) und der Verbindungsstücke (72) eine Schwalbenschwanzform aufweist.

10. Anordnung eines beweglichen Gebäudes (10) nach einem der vorstehenden Ansprüche, **dadurch gekennzeichnet, dass** sie ein Versorgungsnetz (20) zur Versorgung mit Strom und Fluiden umfasst und dass der eine Mast (32) eine C-förmige, entlang einer Erzeugenden vorgesehene Aufnahme (44) umfasst, die mindestens die ringgewellte dehnbare Abwasserleitung (50), der ein Krümmer zugeordnet ist, aufnimmt.

11. Anordnung eines beweglichen Gebäudes (10) nach einem der vorstehenden Ansprüche, **dadurch gekennzeichnet, dass** das Gestell (12) und die Schwimmmittel (14) eine hydrodynamische Form mit einem Bug (40) und einem Heck (42) aufweisen.
